# EUROPEAN PATENT APPLICATION

(11) **EP 4 642 034 A1**
(43) Date of publication of application: **29.10.2025**
(21) Application number: 23905722.7
(22) Date of filing: 07.12.2023
(51) Int. Cl.: H04N 21/81, G06F 16/68

(54) **VIDEO MUSIC MATCHING METHOD AND DEVICE, STORAGE MEDIUM, AND PROGRAM PRODUCT**

(30) Priority: 19.12.2022 CN 202211635265
(71) Applicant: Beijing Zitiao Network Technology Co., Ltd., Beijing 100190 (CN)
(72) Inventor: YANG, Jie, Beijing 100028 (CN)
(74) Representative: Grünecker Patent- und Rechtsanwälte PartG mbB
(86) International application number: PCT/CN2023/137128
(87) International publication number: WO 2024/131555

(57) **Abstract**

The embodiment of the disclosure provides a method, device, storage medium and program product for video soundtrack. The method includes: obtaining target attribute information of a video material to be soundtracked in a video track of a video editing tool; performing image recognition on the video material to determine an image content feature of the video material; obtaining a candidate soundtrack from a music library based on the target attribute information and the image content feature; and in response to a selection instruction of a user for the candidate soundtrack, synthesizing a target candidate soundtrack selected by the user and the video material. The embodiments of the present disclosure perform soundtrack recommendation based on target attribute information and image content features of the video material, which can improve the accuracy of the soundtrack recommendation, reduce the cost of selecting the soundtrack by the user. Thus, it reduces the operational complexity of selecting the soundtrack as well as editing the video by the user, and facilitates faster and better output of high-quality videos.

## Description

This application claims priority to a Chinese patent application No. 202211635265. X, filed on December 19, 2022 and entitled 'METHOD, DEVICE, STORAGE MEDIUM AND PROGRAM PRODUCT FOR VIDEO SOUNDTRACK,' the entire content of which is incorporated herein by reference.

### FIELD

The embodiments of the present disclosure relate to the technical field of computer and network communication, in particular to a method, device, storage medium and program product for video soundtrack.

### BACKGROUND

In video editing, soundtracks (background music) are usually added to the video to achieve the purpose of setting the atmosphere, enhancing the mood of the video, stimulating the interest of the audience, and mobilizing the audience to participate in the plot.

Existing video editing solutions usually provide users with the function of editing soundtracks and provide some soundtrack content for users to choose from. Existing soundtrack content provision solutions usually recommend popular soundtracks, i.e., prioritize the soundtracks that are in use, searched for, or have a large growth rate to recommend to the user; or recommend them by type, grouping soundtracks with commonly used types, such as "Pop", 'Rhythm', 'Fresh', 'Travel', etc. Users can select the soundtracks in accordance with their own creative themes by enter the sub-page for selection.

The accuracy of the recommended popular soundtracks is poor, and the cost for users to find their favorite soundtracks is high; while the classification granularity of the sub-genre recommendation is coarse and the types are not flexible enough, so the cost for users to select soundtracks has not been significantly reduced.

### SUMMARY

The embodiments of the present disclosure provides a method, device, storage medium and program product for video soundtrack, so that the accuracy of soundtrack recommendation is improved, and the cost of selecting music by a user is reduced.

In a first aspect, a video soundtrack method is provided by an embodiment of the present disclosure, including:
obtaining target attribute information of a video material to be soundtracked in a video track of a video editing tool;
performing image recognition on the video material to determine an image content feature of the video material;
obtaining a candidate soundtrack from a music library based on the target attribute information and the image content feature; and
in response to a selection instruction of a user for the candidate soundtrack, synthesizing a target candidate soundtrack selected by the user and the video material.

In a second aspect, a video soundtrack device is provided by an embodiment of the present disclosure, including:
an information extracting unit configured to obtain target attribute information of a video material to be soundtracked in a video track of a video editing tool;
a feature extracting unit configured to perform image recognition on the video material to determine an image content feature of the video material;
a soundtrack recommendation unit configured to obtain a candidate soundtrack from a music library based on the target attribute information and the image content feature; and
an editing unit configured to in response to a selection instruction of a user for the candidate soundtrack, synthesize the target candidate soundtrack selected by the user and the video material.

In a third aspect, an electronic device is provided by an embodiment of the present disclosure, including: at least one processor and a memory;
the memory storing computer-executable instructions;
the at least one processor executing the computer-executable instructions stored in the memory, to cause the at least one processor to perform the method of the first aspect and various possible designs of the first aspect.

In a fourth aspect, a computer-readable storage medium storing computer-executable instructions is provided by an embodiment of the present disclosure, and the computer-executable instructions, when executed by a processor, the method of the first aspect and the possible designs of the first aspect is implemented.

In a fifth aspect, a computer program product is provided by an embodiment of the present disclosure, including computer-executable instructions that, when executed by a processor, the method of the first aspect and various possible designs of the first aspect is implemented.

The present disclosure provides a method, device, storage medium and program product for video soundtrack, and the method includes: obtaining target attribute information of a video material to be soundtracked in a video track of a video editing tool; performing image recognition on the video material to determine an image content feature of the video material; obtaining a candidate soundtrack from a music library based on the target attribute information and the image content feature; and in response to a selection instruction of a user for the candidate soundtrack, synthesizing a target candidate soundtrack selected by the user and the video material. The embodiments of the present disclosure perform soundtrack recommendation based on target attribute information and image content features of the video material, which can improve the accuracy of the soundtrack recommendation, reduce the cost of selecting the soundtrack by the user. Thus, it reduces the operational complexity of selecting the soundtrack as well as editing the video by the user, and facilitates faster and better output of high-quality videos.

### BRIEF DESCRIPTION OF DRAWINGS

In order to more clearly illustrate the embodiments of the present disclosure or the technical solutions in the prior art, the accompanying drawings used in the description of the embodiments, or the prior art will be briefly introduced below. It will be apparent that the drawings in the following description are some embodiments of the present disclosure, and those skilled in the art may also obtain other drawings based on these drawings without creative labor.
FIG. 1 is an example diagram of an application scenario of a video soundtrack method according to an embodiment of the present disclosure;
FIG. 2 is a schematic flowchart of a video soundtrack method according to an embodiment of the present disclosure;
FIG. 3 is a schematic flowchart of a video soundtrack method according to a further embodiment of the present disclosure;
FIG. 4 is a structural block diagram of a video soundtrack device according to an embodiment of the present disclosure;
FIG. 5 is a schematic diagram of a hardware structure of an electronic device according to an embodiment of the present disclosure.

### DETAILED DESCRIPTION

**In** order to make the objectives, technical solutions and advantages of the embodiments of the present disclosure clearer, the technical solutions in the embodiments of the present disclosure will be clearly and completely described below with reference to the accompanying drawings in the embodiments of the present disclosure. All other embodiments obtained by those skilled in the art based on the embodiments of the present disclosure without creative efforts shall fall within the scope of the present disclosure.

Existing video editing solutions usually provide users with the function of editing soundtracks and provide some soundtrack contents for users to choose from. Existing soundtrack content provision solutions usually recommend the current popular soundtracks, i.e., prioritize the soundtracks that are used, searched for in larger quantities, or have a larger growth rate at the moment to the users; or sub-type recommendation, which categorizes soundtracks in commonly used types, such as "Pop", 'Rhythm', 'Fresh', 'Travel', etc. Users can select the soundtracks according to their own theme by entering the sub-page.

The accuracy of the program recommendation of the current popular soundtracks is poor, and the cost for users to find their favorite soundtracks is high, and users need to keep clicking, loading, and auditioning in order to find their favorite soundtracks. The sub-genre recommendation has a coarse classification granularity and is not flexible enough, which also requires users to enter the sub-genre sub-page of the soundtrack and keep clicking, loading and auditioning, so the cost of selecting a soundtrack is not significantly reduced.

**In** order to solve the technical problem, the present disclosure provides a video soundtrack method including: obtaining target attribute information of a video material to be soundtracked in a video track of a video editing tool; performing image recognition on the video material to determine an image content feature of the video material; obtaining a candidate soundtrack from a music library based on the target attribute information and the image content feature; and in response to a selection instruction of a user for the candidate soundtrack, synthesizing a target candidate soundtrack selected by the user and the video material. The embodiments of the present disclosure perform soundtrack recommendation based on the target attribute information of the video material and the image content features of the video frame image, which can improve the accuracy of the soundtrack recommendation, reduce the cost of selecting the soundtrack by the user. Thus, it reduces the operational complexity of selecting the soundtrack as well as editing the video by the user, and facilitates faster and better output of high-quality videos.

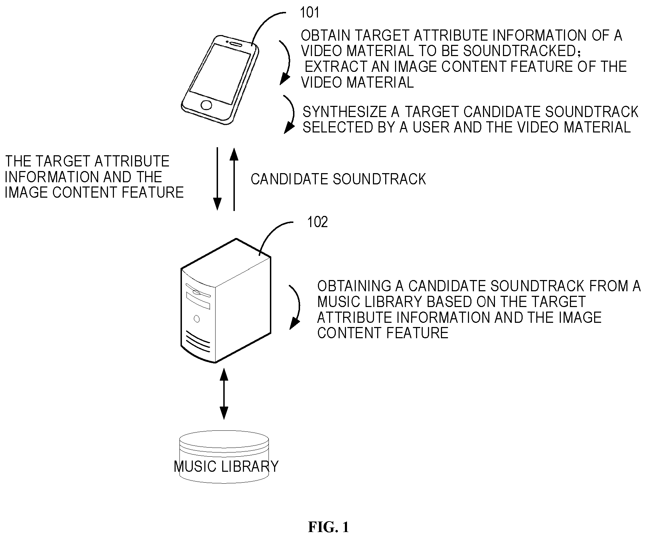

The video soundtrack method provided by the present disclosure is applicable to an application scenario as shown in FIG. 1, and may include a terminal device 101 and a server 102, where a user may upload a video material to be soundtracked into a video track of a video editing tool of the terminal device 101, or a user may select a video material to be soundtracked from a pre-stored video material in the terminal device 101 and add the video material to be soundtracked into a video track of the video editing tool, or a user may directly invoke a camera recording video material of the terminal device 101 by applying it to the video editing tool of the terminal device 101. The terminal device 101 may obtain target attribute information of a video material to be soundtracked in a video track of a video editing tool; extract a video frame image from the video material, and perform image recognition to extract an image content feature; send the target attribute information and the image content feature to the server 102. The server 102 may obtain a candidate soundtrack from the music library based on the target attribute information and image content feature, and return the candidate soundtrack to the terminal device 101. The user may audition and select the candidate soundtrack on the terminal device 101, and in response to the selection instruction of the candidate soundtrack by the user, the terminal device 101 adds the target candidate soundtrack selected by the user into a corresponding audio track of the video material to synthesize the audio track and the video track.

In a further application scenario, the terminal device may further directly upload the video material to be soundtracked in a video track of a video editing tool to a server, which obtains target attribute information of the video material to be soundtracked; extracts the image content features of the video material; obtains a candidate soundtrack from a music library based on the target attribute information and the image content features and returns the candidate soundtrack to the terminal device. The user may audition and select the candidate soundtrack on the terminal device, and in response to the selection instruction of the user for the candidate soundtrack, the terminal device synthesizes the target candidate soundtrack selected by the user and the video material. Alternatively, the terminal device sends the selection instruction of the user for the candidate soundtrack to the server, which synthesizes the target candidate soundtrack selected by the user and the video material.

The present disclosure will be described in detail below with reference to specific embodiments.

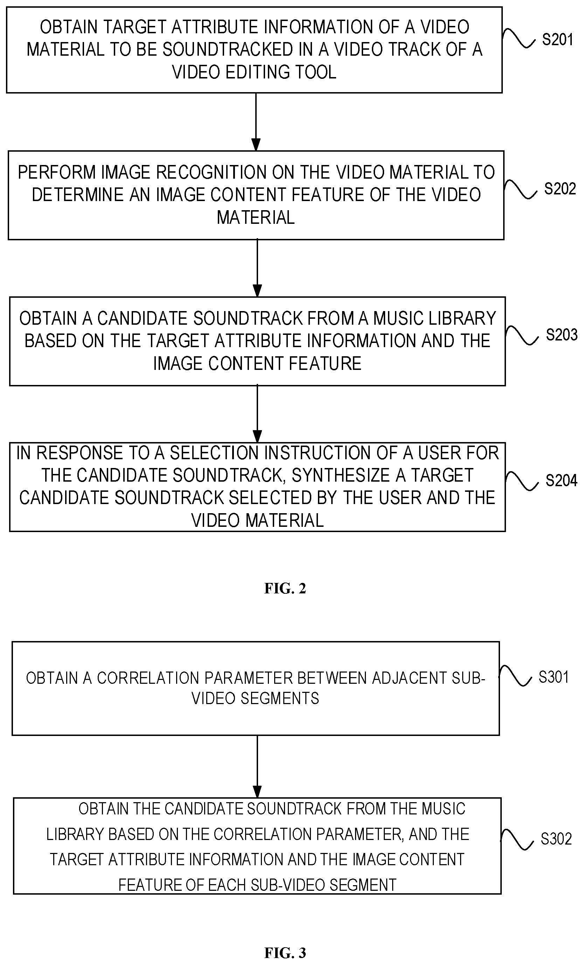

FIG. 2 is a schematic flowchart of a video soundtrack method according to an embodiment of the present disclosure. The method of this embodiment may be applied to a terminal device or a server.

At S201, target attribute information of a video material to be soundtracked in a video track of a video editing tool is obtained.

In this embodiment, in a video editing scenario, target attribute information of the video material to be soundtracked in the video track of the video editing tool may be obtained.

Therein, under the premise that the user authorizes corresponding permissions (e.g., file access permissions, positioning permissions, information obtaining permissions, etc.), some desired target attribute information of the video material may be obtained, such as the recording time, the season, the weather, the recording location, and so on.

Optionally, the target attribute information may be extracted from the attribute information of the video material, wherein the attribute information of the video material may include, but is not limited to, the recording time, the recording location, the video duration, the size of the occupied storage space, and so on. From which the desired key attribute information may be extracted, such as the recording time, the recording location, and other key attribute information. In case the target attribute information such as recording time and recording location does not exist in the attribute information of the video material, the current time and current location may be obtained under the premise of user authorization, or an input interface may be provided for the user to input the recording time and location on their own.

**On** the basis of the key attribute information, derivative attribute information may further be obtained based on the key attribute information. For example, the key attribute information may be preliminarily processed to determine, based on the recording time, the seasons and festivals, weather information (e. g., weather information may be queried through the recording time and the recording location), the area (e. g., scenic spot, business district), etc., at the time of the recording of the video material.

The key attribute information and/or the derivative attribute information may be determined in this embodiment as the target attribute information as a kind of key information that can reflect the content of the video material.

At S202, image recognition is performed on the video material to determine an image content feature of the video material.

In this embodiment, in a video editing scenario, one or more video frame images may be extracted from the video material to be soundtracked in the video track of the video editing tool, and image recognition may be performed on the video frame images, and image content features may be extracted from the video frame images, e.g., from the video frame images to the sky, the coast, the trees, the flowers, the buildings, and other key elements, as image content features. Wherein extracting the image content features may be performed by using any image recognition algorithm, which is not limited herein.

In addition, a video frame image may be a key frame or an arbitrary frame in the video material. Optionally, in order to ensure the number of video frame images as well as the processing efficiency, a predetermined number of video frame images may be extracted from the video material at equal intervals based on the duration of the video material. For example, if the duration of the video material is less than 30 seconds, 2 frames may be extracted from the video material at equal intervals; if the duration of the video material is more than 30 seconds but less than 1 minute, 3 frames may be extracted from the video material at equal intervals; if the duration of the video material is more than 1 minute, 5 frames may be extracted from the video material at equal intervals, and so on.

It is to be noted that the present embodiment does not limit the order of sequence between S201 and S202, but may be performed sequentially or simultaneously.

At S203, a candidate soundtrack is obtained from a music library based on the target attribute information and the image content feature.

In this embodiment, after obtaining the target attribute information and the image content feature of the video material, matching may be performed from the music library based on the target attribute information and image content features, and one or more candidate soundtracks may be recommended for selection by the user.

In addition, the current hot information can also be considered, based on which the corresponding priority (or weight) can be configured for the target attribute information, image content feature and current hot information. Among them, the target attribute information may best reflect the main content of the video material and is most important for recommending the soundtrack, so the highest priority (or weight) can be configured for the target attribute information. In addition, image content features are extracted from part of the video frame images of the video material, which are representative but may be relatively one-sided, so medium priority (or weight) can be configured for image content features. Whereas the current hot information is generally less relevant to the video material and only serves as reference information for recommending the soundtrack, the lowest priority (or weight) can be configured for the current hot information. Certainly, the above predetermined priority (or weight) order can also be changed or other priority (or weight) order can be used, without limitation here.

Further, when obtaining the candidate soundtrack from the music library, the method may specifically include:
**searching,** based on a predetermined priority order, a predetermined number of soundtracks matching the target attribute information, the image content feature and current hot information respectively from the music library, and determining the predetermined number of soundtracks as the candidate soundtrack.

In this embodiment, when recommending a soundtrack, a predetermined number of soundtracks may be found and matched in the music library based on the target attribute information, the image content feature, and the current hot information, respectively and individually. The soundtracks are determined as candidate soundtracks after sorting the soundtracks in a predetermined priority order. Optionally, the information with a higher priority corresponds to a larger predetermined number of presets, for example, if the target attribute information has the highest priority, the predetermined number of recommended soundtracks based on the target attribute information is the largest.

In addition, the target attribute information, the image content feature, and the current hit information may also be combined with each other to find and match the predetermined number of soundtracks in the music library. For example, a predetermined number of soundtracks may be found and matched in the music library based on the target attribute information and the image content feature, a predetermined number of soundtracks may be found and matched in the music library based on the target attribute information and the current hot information, a predetermined number of soundtracks may be found and matched in the music library based on the target attribute information, the image content feature, and the current hot information, and so on.

At S204, in response to a selection instruction of a user for the candidate soundtrack, a target candidate soundtrack selected by the user and the video material is synthesized.

In this embodiment, after the candidate soundtrack is obtained, it may be presented to the user for the user to audition. The user may select to use a candidate soundtrack as the soundtrack of the video material after the audition. Then, in response to the selection instruction of the user for the candidate soundtrack, the target candidate soundtrack selected by the user may be determined from the candidate soundtracks, and the target candidate soundtrack is determined as a soundtrack for the video material to be synthesized with the video material to achieve automatic adding of the target candidate soundtrack to the video material.

Specifically, the target candidate soundtrack selected by the user may be input into an audio track corresponding to the video material to synthesize the audio track and the video track. Herein, the track timeline interval of the target candidate soundtrack in the audio track and the track timeline interval of the video material to be soundtracked in the video track correspond to each other. Optionally, the track timeline interval of the target candidate soundtrack in the audio track may override the track timeline interval of the video material to be soundtracked in the video track for the user to continue editing.

The video soundtrack method provided by the embodiments includes: obtaining target attribute information of a video material to be soundtracked in a video track of a video editing tool; performing image recognition on the video material to determine an image content feature of the video material; obtaining a candidate soundtrack from a music library based on the target attribute information and the image content feature; and in response to a selection instruction of a user for the candidate soundtrack, synthesizing a target candidate soundtrack selected by the user and the video material. The embodiments perform soundtrack recommendation based on the target attribute information of the video material and the image content features of the video frame image, which can improve the accuracy of the soundtrack recommendation, reduce the cost of selecting the soundtrack by the user. Thus, it reduces the operational complexity of selecting the soundtrack as well as editing the video by the user, and facilitates faster and better output of high-quality videos.

In an optional embodiment, the video material to be soundtracked may have a plurality of sub-video segments, in which case the obtaining of a candidate soundtrack from a music library as described in S203 above based on the target attribute information and the image content feature, as shown in FIG. 3, specifically includes:
At S301, a correlation parameter between adjacent sub-video segments is obtained;
At S302, the candidate soundtrack is obtained from the music library based on the correlation parameter, and the target attribute information and the image content feature of each sub-video segment.

In this embodiment, considering that there may be a certain correlation between a plurality of sub-video segments, adjacent sub-video segments with a relatively high correlation may be merged together to use a soundtrack, avoiding the user from having to select a soundtrack for each sub-video segment. A correlation parameter of the adjacent sub-video segments may first be obtained, and based on the correlation parameter, it may be determined whether the adjacent sub-video segments may be merged together to use a soundtrack. Wherein the correlation parameter of the adjacent sub-video segments may be determined based on the similarity of target attribute information and/or image content features of the adjacent sub-video segments, or other algorithms may be employed that can compare video similarity or correlation, which may not be limited herein. Further, if the correlation parameter of any adjacent sub-video segment is greater than a predetermined threshold, the adjacent sub-video segments may be merged and processed as a combination of sub-video segments, such as sub-video segments A, B, C, D, E, and F. If the correlation parameter between adjacent sub-video segments A and B is greater than a predetermined threshold, and the correlation parameter between adjacent sub-video segments B and C is greater than a predetermined threshold, the sub video segments A, B, and C may be determined as a sub-video segment and may share a soundtrack. The correlation parameter between adjacent sub-video segments C and D is not greater than a predetermined threshold, and the correlation parameter between adjacent sub-video segments D and E is not greater than a predetermined threshold, then the sub-video segment D does not form a combination of sub-video segments with adjacent sub-video segments, and a separate soundtrack is used. The correlation parameter between adjacent sub-video segments E and F is greater than the predetermined threshold, then the sub-video segments E, F may be determined as a sub-video segment and may share a piece of soundtrack.

After determining adjacent sub-video segments with the correlation parameter greater than a predetermined threshold as a sub-video segment combination, the target attribute information and the image content feature of various sub-video segments in the sub-video segment combination may be integrated. During integration, one or more operations including, but not limited to, generalizing, expanding, rounding, and the like may be performed based on the target attribute information and image content feature of each sub-video segment. Further, the candidate soundtracks can then be obtained from the music library based on the integrated target attribute information and image content feature as a candidate soundtrack shared by the various sub-video segments in the sub-video segment combination, wherein a set of candidate soundtracks (one or more) is obtained for each sub-video segment combination.

For the integration process, for example, if the user imports three sub-video segments A, B, C, each extracted target attribute information and image content features are: A (10s, April, sunny, a park in city Y, flowers, etc.); B (20s, April, cloudy, a shopping mall in city Y, nothing, etc.); C (5s, March, cloudy, a residential area in city Y, children, etc.). After a comprehensive judgment that the correlation between sub-video segments A, B, and C is high, the target attribute information and image content features of each sub-video segment are integrated and expanded as: spring, sunny to cloudy, city Y, indoor, fashion, popular (obtained from the feature information of city Y and a shopping mall), natural scenery, children, cute, etc. Further, a candidate soundtrack can be obtained from the music library based on the integrated target attribute information and image content features as a common candidate soundtrack for sub-video segments A, B, and C.

As a further example, the user imports three sub-video segments A, B, and C, and the target attribute information and image content features extracted for each of them are: A (10s, April, sunny, a park in city Y, flowers, etc.); B (20s, April, cloudy, a shopping mall in city Y, nothing, etc.); and C (5s, December, cloudy, a scenic spot in city Z, mountain peaks, etc.). After a comprehensive judgment that the correlation between sub-video segments A and B is high, and the correlation with video material C is low, the sub-video segments material A and B can be integrated first, which in turn can be used to obtain a candidate soundtrack from the music library based on the integrated target attribute information and image content feature as a candidate soundtrack for the merging of video material A and B into the video material. And for the video matching material C can continue to use the candidate soundtrack of the merged video material A, B, or can obtain the candidate soundtrack from the music library based on the target attribute information and image content feature of the video material C alone.

In an optional embodiment, on the basis of the foregoing embodiments, in the process of integrating the target attribute information and the image content feature described above for each sub-video segment in the combination of the sub-video segments and in the process of obtaining a candidate soundtrack, the process may specifically also include:
determining a weight of each sub-video segment in the sub-video segment combination based on predetermined attribute information of the sub-video segment;
determining a weight of each target attribute information and a weight of each image content feature in the integrated target attribute information and image content feature based on the weight of each sub-video segment in the sub-video segment combination, wherein the target attribute information and the image content feature of a sub-video segment with a higher weight have higher weights;
obtaining the candidate soundtrack from the music library based on the integrated target attribute information and image content feature, and the corresponding weight.

In this embodiment, for any combination of sub-video segments, a weight of each sub-video segment may be determined based on predetermined attribute information of each sub-video segment in the combination of sub-video segments, such as determining a weight based on the order in which the sub-video segments are located and/or the duration of the sub-video segments. The sub-video segments that are in a higher order and have a longer duration have a greater weight. Based on the weight information of each sub-video segment, the weight information of each target attribute information and image content feature in the integrated target attribute information and image content feature may be determined, and a sub-video segment with a higher weight has a higher weight of the target attribute information and image content feature. In addition, when performing the rounding operation on the target attribute information and image content features of the sub-video segments, the target attribute information and image content features with higher weights are also retained as much as possible.

Further, when obtaining the candidate soundtrack from the music library based on the integrated target attribute information and the image content feature, the candidate soundtrack may specifically be obtained from the music library based on the integrated target attribute information and the image content feature, and the corresponding weights.

In this embodiment, when obtaining a candidate soundtrack from the music library based on the integrated target attribute information and image content features, the candidate soundtrack can be matched and found from the music library based on the weights of the target attribute information and the image content features because the target attribute information and the image content features are configured with weights. Wherein the obtained candidate soundtracks have a higher matching degree with the target attribute information and image content features with higher weights, or the number of candidate soundtracks matching the target attribute information and image content features with higher weights is higher, the ordering is more advanced, etc.

Optionally, the candidate soundtrack corresponding to the combination of sub-video segments may also be applied to independent sub-video segments that do not belong to the combination of sub-video segments. Alternatively, the independent sub-video segments not belonging to the combination of sub-video segments may also obtain the candidate soundtrack from the music library individually based on their target attribute information and image content features.

On the basis of the above embodiment, if there are no adjacent sub-video segments in the video material with a correlation parameter greater than a predetermined threshold, i.e., all the sub-video segments are not correlated, candidate soundtracks corresponding to each sub-video segment are obtained from the music library individually on the basis of the target attribute information and image content feature of each sub-video segment.

In a further optional embodiment, on the basis of the foregoing embodiment, for a plurality of sub-video segments included in the video material, a soundtrack may also be uniformly used. The specific process is as follows:
integrating the target attribute information and the image content features of all sub-video segments; and
obtaining, from the music library based on the integrated target attribute information and image content feature, the candidate soundtrack as a candidate soundtrack shared by all the sub-video segments.

In this embodiment, all sub-video segments may be determined as a whole recommended soundtrack, i.e., only one target candidate soundtrack is ultimately selected from all sub-video segments as the soundtrack for all sub-video segments. In this case, the target attribute information and image content features of all the sub-video segments may be integrated. One or more operations including, but not limited to, generalizing, expanding, rounding, and the like, may be performed during the integration.

Further, the weight of each sub-video segment among all the sub-video segments may be determined based on the predetermined attribute information of each sub-video segment. For example, the weight information is determined based on the order in which the video material of each sub-video segment is located and/or the duration of the video material of the sub-video segment, with the sub-video segments that are in a higher order and longer in duration having a greater weight. Then, based on the weight of each sub-video segment, the weight of each target attribute information and image content feature in the integrated target attribute information and image content feature is determined; wherein a sub-video segment with a higher weight has a higher weight of the target attribute information and image content feature.

**In** a further possible embodiment, whether the correlation parameter is a predetermined threshold for classifying adjacent sub-video segments into sub-video segment combinations and/or independent sub-video segments may include the following cases, all sub-video segments may be classified into a plurality of video segment combinations, or all sub-video segments may be classified into video segment combinations as well as independent sub-video segments, or all sub-video segments may be independent sub-video segments. The weight of each combination of sub-video segments and the weight of each independent sub-video segment is further determined based on the predetermined attribute information of each combination of sub-video segments and/or independent sub-video segments. Similarly, regardless of the sub-video segments or independent sub-video segments, a greater weight is given to the first in order and longer in duration. Further, based on the weight of each combination of sub-video segments and the weight of each independent sub-video segment, the weight of each target attribute information and image content feature in the integrated target attribute information and image content feature is determined. Wherein the combination of sub-video segments with higher weights or the independent sub-video segments corresponding to the target attribute information and image content features have higher weights, similar to the above embodiments, and will not be repeated herein.

Further, based on the weights of each target attribute information and image content feature in the integrated target attribute information and image content feature, a predetermined number of soundtracks from the music library are determined to be candidate soundtracks for all sub-video segments. For example, the matching degree of the obtained candidate soundtracks with the target attribute information and image content features with higher weights is made higher, or the number of candidate soundtracks matching the target attribute information and image content features with higher weights is made larger, the ordering is higher, and so on.

**On** the basis of the above embodiment, if the user enters a soundtrack function after selecting a sub-video segment of the video material in the video editing tool, the candidate soundtrack may be obtained for the sub-video segment alone, and thus the user may obtain the candidate soundtrack for each sub-video segment individually in this manner. If the user enters the soundtrack function directly, or enters the soundtrack function after simultaneously selecting a plurality of sub-video segments in the video material, the process of recommending a soundtrack for the plurality of sub-video segments provided in the various possible embodiments described above is performed.

On the basis of any of the above embodiments, after synthesizing the target candidate soundtrack selected by the user with the video material, further including:
For any segment of the target candidate soundtrack, a transition effect of fading in and out is configured.

In the present embodiment, for the articulation of a plurality of target candidate soundtracks, a transition effect of fading in and out may be configured, i.e., the end of the former target candidate soundtrack is configured to fade in, and the beginning of the latter target candidate soundtrack is configured to fade out, so as to better implement the transition. Naturally, for the case where there is only one piece of the target candidate soundtrack, the target alternate soundtrack may also be faded in at the beginning, and/or faded out at the end.

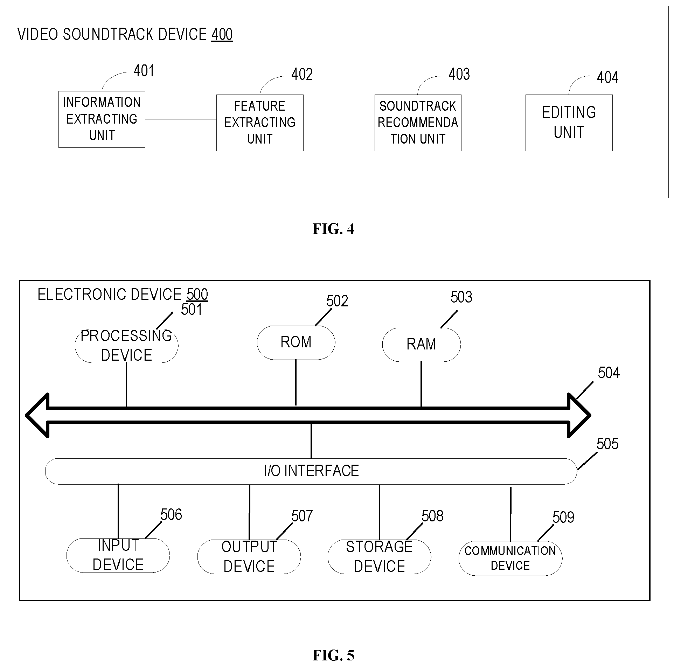

Corresponding to the video soundtrack method in the foregoing embodiment, FIG. 4 is a structural block diagram of a video soundtrack device according to an embodiment of the present disclosure. For ease of illustration, only parts related to the embodiments of the present disclosure are shown. Referring to FIG. 4, a video soundtrack device 400 includes: an information extracting unit 401, a feature extracting unit 402, a soundtrack recommendation unit 403, and an editing unit 404.
The information extracting unit 401 is configured to obtain target attribute information of a video material to be soundtracked in a video track of a video editing tool;
The feature extracting unit 402 is configured to perform image recognition on the video material to determine an image content feature of the video material;
The soundtrack recommendation unit 403 is configured to obtain a candidate soundtrack from a music library based on the target attribute information and the image content feature;
The editing unit 404 is configured to, in response to a selection instruction of a user for the candidate soundtrack, synthesize a target candidate soundtrack selected by the user and the video material.

In one or more embodiments of the present disclosure, the video material includes a plurality of sub-video segments; and obtaining the candidate soundtrack from the music library based on the target attribute information and the image content feature, the soundtrack recommendation unit 403 is configured to:
obtain a correlation parameter between adjacent sub-video segments;
obtain the candidate soundtrack from the music library based on the correlation parameter, and the target attribute information and the image content feature of each sub-video segment.

In one or more embodiments of the present disclosure, when obtaining the candidate soundtrack from the music library based on the correlation parameter, and the target attribute information and the image content feature of each sub-video segment, the soundtrack recommendation unit 403 is configured to:
determine adjacent sub-video segments with the correlation parameter greater than a predetermined threshold as a sub-video segment combination;
integrate the target attribute information and the image content feature of various sub-video segments in the sub-video segment combination; and
obtain, from the music library based on the integrated target attribute information and image content feature, the candidate soundtrack as a candidate soundtrack shared by the various sub-video segments in the sub-video segment combination.

In one or more embodiments of the present disclosure, when obtaining the candidate soundtrack from the music library based on the integrated target attribute information and the image content feature, the soundtrack recommendation unit 403 is configured to:
determine a weight of each sub-video segment in the sub-video segment combination based on predetermined attribute information of the sub-video segment;
determine a weight of each target attribute information and a weight of each image content feature in the integrated target attribute information and image content feature based on the weight of each sub-video segment in the sub-video segment combination; wherein the target attribute information and the image content feature of a sub-video segment with a higher weight have higher weights; and
obtain the candidate soundtrack from the music library based on the integrated target attribute information and image content feature, and the corresponding weight.

In one or more embodiments of the present disclosure, when obtaining the candidate soundtrack from the music library based on the correlation parameter, and the target attribute information and the image content feature of each sub-video segment, the soundtrack recommendation unit 403 is configured to:
in accordance with a determination that there is no adjacent sub-video segment with the correlation parameter greater than a predetermined threshold, obtain the candidate soundtrack corresponding to each sub-video segment from the music library based on the target attribute information and the image content feature of each sub-video segment.

In one or more embodiments of the present disclosure, the video material includes a plurality of sub-video segments; and obtaining the candidate soundtrack from the music library based on the target attribute information and the image content feature, the soundtrack recommendation unit 403 is configured to:
integrate the target attribute information and the image content features of all sub-video segments; and
obtain, from the music library based on the integrated target attribute information and image content feature, the candidate soundtrack as a candidate soundtrack shared by all the sub-video segments.

In one or more embodiments of the present disclosure, when obtaining the candidate soundtrack from the music library based on the integrated target attribute information and image content feature, the soundtrack recommendation unit 403 is configured to:
determine a weight of each sub-video segment based on predetermined attribute information of the sub-video segment;
determine a weight of each target attribute information and a weight of each image content feature in the integrated target attribute information and image content feature based on the weight of each sub-video segment; wherein the target attribute information and the image content feature of a sub-video segment with a higher weight have higher weights; and
obtain the candidate soundtrack from the music library based on the integrated target attribute information and image content feature, and the corresponding weight.

In one or more embodiments of the present disclosure, when the information extracting unit 401 obtains the target attribute information of the video material to be soundtracked in the video track of the video editing tool, the information extracting unit 401 is configured to:
**extract** key attribute information from attribute information of the video material to be soundtracked; and
obtain derivative attribute information based on the key attribute information, and determine the key target attribute information and/or the derivative attribute information as the target attribute information.

In one or more embodiments of the present disclosure, when obtaining the candidate soundtrack from the music library based on the target attribute information and the image content feature, the soundtrack recommendation unit 403 is configured to:
Search, based on a predetermined priority order, a predetermined number of soundtracks matching the target attribute information, the image content feature and current hot information respectively from the music library, and determining the predetermined number of soundtracks as the candidate soundtrack.

In one or more embodiments of the present disclosure, the predetermined priority order, from high to low, is: the target attribute information, the image content feature, and the current hot information.

In one or more embodiments of the present disclosure, when synthesizing the target candidate soundtrack selected by the user and the video material, the editing unit 404 is configured to:
input the target candidate soundtrack selected by the user into an audio track corresponding to the video material to synthesize the audio track and the video track.

The device provided in this embodiment may be configured to perform the technical solutions in the foregoing method embodiments, and implementation principles and technical effects thereof are similar, and details are not described herein again in this embodiment.

FIG. 5 shows a schematic structural diagram of an electronic device 500 suitable for implementing embodiments of the present disclosure, and the electronic device 500 may be a terminal device or a server. The terminal device may include, but is not limited to, a mobile terminal such as a mobile phone, a notebook computer, a digital broadcast receiver, a personal digital assistant (PDA), a tablet computer (PAD), a portable multimedia player (PMP), an in-vehicle terminal (for example, an in-vehicle navigation terminal), and a fixed terminal such as a digital TV, a desktop computer, or the like. The electronic device shown in FIG. 5 is merely an example and should not impose any limitation on the functions and scope of use of the embodiments of the present disclosure.

As shown in FIG. 5, the electronic device 500 may include a processing device (for example, a central processing unit, a graphics processor, etc. ) 501, which may perform various appropriate actions and processing according to a program stored in a read only memory (ROM) 502 or a program loaded into a random access memory (RAM) 503 from a storage device 508. In the RAM 503, various programs and data required by the operation of the electronic device 500 are also stored. The processing device 501, the ROM 502, and the RAM 503 are connected to each other through a bus 504. An input / output (I / O) interface 505 is also connected to bus 504.

Generally, the following devices may be connected to the I / O interface 505: an input device 506 including, for example, a touch screen, a touch pad, a keyboard, a mouse, a camera, a microphone, an accelerometer, a gyroscope, etc.; an output device 507 including, for example, a liquid crystal display (LCD), a speaker, a vibrator, etc.; a storage device 508 including, for example, a magnetic tape, a hard disk, etc.; and a communication device 509. The communication device 509 may allow the electronic device 500 to communicate wirelessly or wired with other devices to exchange data. While FIG. 5 shows an electronic device 500 having various devices, it should be understood that it is not required to implement or have all illustrated devices. More or fewer devices may alternatively be implemented or provided.

In particular, according to an embodiment of the present disclosure, the process described above with reference to the flowchart may be implemented as a computer software program. For example, embodiments of the present disclosure include a computer program product including a computer program embodied on a computer readable medium, the computer program including program code for performing the method shown in the flowchart. In such embodiments, the computer program may be downloaded and installed from the network through the communication device 509, or installed from the storage device 508, or from the ROM 502. When the computer program is executed by the processing apparatus 501, the foregoing functions defined in the method of the embodiments of the present disclosure are performed.

**It** should be noted that the computer-readable medium described above may be a computer readable signal medium, a computer readable storage medium, or any combination of the foregoing two. The computer-readable storage medium may be, for example, but not limited to, an electrical, magnetic, optical, electromagnetic, infrared, or semiconductor system, device, or device, or any combination thereof. More specific examples of computer-readable storage media may include, but are not limited to, an electrical connection having one or more wires, a portable computer diskette, a hard disk, a random access memory (RAM), a read-only memory (ROM), an erasable programmable read-only memory (EPROM or Flash memory), an optical fiber, a portable compact disk read-only memory (CD-ROM), an optical storage device, a magnetic storage device, or any suitable combination of the foregoing. In the present disclosure, a computer-readable storage medium may be any tangible medium containing or storing a program that may be used by or in connection with an instruction execution system, apparatus, or device. In the present disclosure, a computer readable signal medium may include a data signal propagated in baseband or as part of a carrier, where the computer readable program code is carried. Such propagated data signals may take a variety of forms including, but not limited to, electromagnetic signals, optical signals, or any suitable combination of the foregoing. The computer readable signal medium may also be any computer readable medium other than a computer readable storage medium that may send, propagate, or transmit a program for use by or in connection with an instruction execution system, apparatus, or device. The program code embodied on the computer-readable medium may be transmitted with any suitable medium, including, but not limited to: wires, optical cables, RF (radio frequency), and the like, or any suitable combination of the foregoing.

The computer-readable medium described above may be included in the electronic device; or may be separately present without being assembled into the electronic device.

The computer-readable medium carries one or more programs, and when the one or more programs are executed by the electronic device, the electronic device is enabled to perform the method shown in the foregoing embodiments.

Computer program code for performing the operations of the present disclosure may be written in one or more programming languages, including object oriented programming languages, such as Java, Smalltalk, C + +, and conventional procedural programming languages, such as the 'C' language or similar programming languages. The program code may execute entirely on a user computer, partially on a user computer, as a stand-alone software package, partially on a user computer, partially on a remote computer, or entirely on a remote computer or server. In the case of a remote computer, the remote computer may be connected to the user computer through any kind of network, including a local area network (LAN) or a wide area network (WAN), or may be connected to an external computer (for example, using an Internet service provider for Internet connection).

The flowcharts and block diagrams in the figures illustrate architecture, functionality, and operation of possible implementations of systems, methods, and computer program products according to various embodiments of the present disclosure. In this regard, each block in the flowchart or block diagram may represent a module, program segment, or portion of code that includes one or more executable instructions for implementing the specified logical function. It should also be noted that in some candidate implementations, the functions noted in the blocks may also occur in a different order than that illustrated in the figures. For example, two consecutively represented blocks may actually be performed substantially in parallel, which may sometimes be performed in the reverse order, depending on the functionality involved. It is also noted that each block in the block diagrams and/or flowcharts, as well as combinations of blocks in the block diagrams and/or flowcharts, may be implemented with a dedicated hardware-based system that performs the specified functions or operations, or may be implemented in a combination of dedicated hardware and computer instructions.

The units involved in the embodiments of the present disclosure may be implemented in software or may be implemented in hardware. For example, the first obtaining unit may be further described as 'obtaining at least two units of Internet Protocol addresses'.

The functions described above may be performed, at least in part, by one or more hardware logic components. For example, without limitation, exemplary types of hardware logic components that may be used include: field programmable gate arrays (FPGAs), application specific integrated circuits (ASICs), application specific standard products (ASSPs), system-on-a-chip (SOCs), complex programmable logic devices (CPLDs), and the like.

**In** the context of the present disclosure, a machine-readable medium may be a tangible medium that may contain or store a program for use by or in connection with an instruction execution system, apparatus, or device. The machine-readable medium may be a machine-readable signal medium or a machine-readable storage medium. The machine-readable medium may include, but is not limited to, electronic, magnetic, optical, electromagnetic, infrared, or semiconductor systems, devices, or devices, or any suitable combination of the foregoing. More specific examples of machine-readable storage media may include electrical connections based on one or more lines, portable computer disks, hard disks, random access memory (RAM), read-only memory (ROM), erasable programmable read-only memory (EPROM or Flash memory), optical fibers, portable compact disc read-only memory (CD-ROM), optical storage devices, magnetic storage devices, or any suitable combination of the foregoing.

According to a first aspect, a video soundtrack method is provided according to one or more embodiments of the present disclosure, including:
obtaining target attribute information of a video material to be soundtracked in a video track of a video editing tool;
performing image recognition on the video material to determine an image content feature of the video material;
obtaining a candidate soundtrack from a music library based on the target attribute information and the image content feature; and
in response to a selection instruction of a user for the candidate soundtrack, synthesizing a target candidate soundtrack selected by the user and the video material.

According to one or more embodiments of the present disclosure, the video material includes a plurality of sub-video segments; and obtaining the candidate soundtrack from the music library based on the target attribute information and the image content feature includes:
obtaining a correlation parameter between adjacent sub-video segments;
obtaining the candidate soundtrack from the music library based on the correlation parameter, and the target attribute information and the image content feature of each sub-video segment.

According to one or more embodiments of the present disclosure, obtaining the candidate soundtrack from the music library based on the correlation parameter, and the target attribute information and the image content feature of each sub-video segment includes:
determining adjacent sub-video segments with the correlation parameter greater than a predetermined threshold as a sub-video segment combination;
integrating the target attribute information and the image content feature of various sub-video segments in the sub-video segment combination; and
obtaining, from the music library based on the integrated target attribute information and image content feature, the candidate soundtrack as a candidate soundtrack shared by the various sub-video segments in the sub-video segment combination.

According to one or more embodiments of the present disclosure, obtaining the candidate soundtrack from the music library based on the integrated target attribute information and the image content feature includes:
determining a weight of each sub-video segment in the sub-video segment combination based on predetermined attribute information of the sub-video segment;
determining a weight of each target attribute information and a weight of each image content feature in the integrated target attribute information and image content feature based on the weight of each sub-video segment in the sub-video segment combination; wherein the target attribute information and the image content feature of a sub-video segment with a higher weight have higher weights; and
obtaining the candidate soundtrack from the music library based on the integrated target attribute information and image content feature, and the corresponding weight.

According to one or more embodiments of the present disclosure, obtaining the candidate soundtrack from the music library based on the correlation parameter, and the target attribute information and the image content feature of each sub-video segment includes:
in accordance with a determination that there is no adjacent sub-video segment with the correlation parameter greater than a predetermined threshold, obtaining the candidate soundtrack corresponding to each sub-video segment from the music library based on the target attribute information and the image content feature of each sub-video segment.

According to one or more embodiments of the present disclosure, the video material includes a plurality of sub-video segments; and obtaining the candidate soundtrack from the music library based on the target attribute information and the image content feature includes:
integrating the target attribute information and the image content features of all sub-video segments; and
obtaining, from the music library based on the integrated target attribute information and image content feature, the candidate soundtrack as a candidate soundtrack shared by all the sub-video segments.

According to one or more embodiments of the present disclosure, obtaining the candidate soundtrack from the music library based on the integrated target attribute information and image content feature includes:
determining a weight of each sub-video segment based on predetermined attribute information of the sub-video segment;
determining a weight of each target attribute information and a weight of each image content feature in the integrated target attribute information and image content feature based on the weight of each sub-video segment; wherein the target attribute information and the image content feature of a sub-video segment with a higher weight have higher weights; and
obtaining the candidate soundtrack from the music library based on the integrated target attribute information and image content feature, and the corresponding weight.

According to one or more embodiments of the present disclosure, obtaining the target attribute information of the video material to be soundtracked in the video track of the video editing tool includes:
extracting key attribute information from attribute information of the video material to be soundtracked; and
obtaining derivative attribute information based on the key attribute information, and determining the key target attribute information and/or the derivative attribute information as the target attribute information.

According to one or more embodiments of the present disclosure, obtaining the candidate soundtrack from the music library based on the target attribute information and the image content feature includes:
searching, based on a predetermined priority order, a predetermined number of soundtracks matching the target attribute information, the image content feature and current hot information respectively from the music library, and determining the predetermined number of soundtracks as the candidate soundtrack.

According to one or more embodiments of the present disclosure, the predetermined priority order, from high to low, is: the target attribute information, the image content feature, and the current hot information.

According to one or more embodiments of the present disclosure, synthesizing the target candidate soundtrack selected by the user and the video material includes:
inputting the target candidate soundtrack selected by the user into an audio track corresponding to the video material to synthesize the audio track and the video track.

According to a second aspect, a video soundtrack device is provided according to one or more embodiments of the present disclosure, including:
an information extracting unit configured to obtain target attribute information of a video material to be soundtracked in a video track of a video editing tool;
a feature extracting unit configured to perform image recognition on the video material to determine an image content feature of the video material;
a soundtrack recommendation unit configured to obtain a candidate soundtrack from a music library based on the target attribute information and the image content feature; and
an editing unit configured to in response to a selection instruction of a user for the candidate soundtrack, synthesize the target candidate soundtrack selected by the user and the video material.

According to one or more embodiments of the present disclosure, the video material includes a plurality of sub-video segments; and when obtaining the candidate soundtrack from the music library based on the target attribute information and the image content feature, the soundtrack recommendation unit is configured to:
obtain a correlation parameter between adjacent sub-video segments;
obtain the candidate soundtrack from the music library based on the correlation parameter, and the target attribute information and the image content feature of each sub-video segment.

According to one or more embodiments of the present disclosure, when obtaining the candidate soundtrack from the music library based on the correlation parameter, and the target attribute information and the image content feature of each sub-video segment, the soundtrack recommendation unit is configured to:
determine adjacent sub-video segments with the correlation parameter greater than a predetermined threshold as a sub-video segment combination;
integrate the target attribute information and the image content feature of various sub-video segments in the sub-video segment combination; and
obtain, from the music library based on the integrated target attribute information and image content feature, the candidate soundtrack as a candidate soundtrack shared by the various sub-video segments in the sub-video segment combination.

According to one or more embodiments of the present disclosure, when obtaining the candidate soundtrack from the music library based on the integrated target attribute information and the image content feature, the soundtrack recommendation unit is configured to:
determine a weight of each sub-video segment in the sub-video segment combination based on predetermined attribute information of the sub-video segment;
determine a weight of each target attribute information and a weight of each image content feature in the integrated target attribute information and image content feature based on the weight of each sub-video segment in the sub-video segment combination; wherein the target attribute information and the image content feature of a sub-video segment with a higher weight have higher weights; and
obtain the candidate soundtrack from the music library based on the integrated target attribute information and image content feature, and the corresponding weight.

According to one or more embodiments of the present disclosure, when obtaining the candidate soundtrack from the music library based on the correlation parameter, and the target attribute information and the image content feature of each sub-video segment, the soundtrack recommendation unit is configured to:
in accordance with a determination that there is no adjacent sub-video segment with the correlation parameter greater than a predetermined threshold, obtain the candidate soundtrack corresponding to each sub-video segment from the music library based on the target attribute information and the image content feature of each sub-video segment.

According to one or more embodiments of the present disclosure, the video material includes a plurality of sub-video segments; and when obtaining the candidate soundtrack from the music library based on the target attribute information and the image content feature, the soundtrack recommendation unit is configured to:
integrate the target attribute information and the image content features of all sub-video segments; and
obtain, from the music library based on the integrated target attribute information and image content feature, the candidate soundtrack as a candidate soundtrack shared by all the sub-video segments.

According to one or more embodiments of the present disclosure, when obtaining the candidate soundtrack from the music library based on the integrated target attribute information and image content feature, the soundtrack recommendation unit is configured to:
determine a weight of each sub-video segment based on predetermined attribute information of the sub-video segment;
determine a weight of each target attribute information and a weight of each image content feature in the integrated target attribute information and image content feature based on the weight of each sub-video segment; wherein the target attribute information and the image content feature of a sub-video segment with a higher weight have higher weights; and
obtain the candidate soundtrack from the music library based on the integrated target attribute information and image content feature, and the corresponding weight.

According to one or more embodiments of the present disclosure, when obtaining the target attribute information of the video material to be soundtracked in the video track of the video editing tool, the information extracting unit is configured to:
extract key attribute information from attribute information of the video material to be soundtracked; and
obtain derivative attribute information based on the key attribute information, and determine the key target attribute information and/or the derivative attribute information as the target attribute information.

According to one or more embodiments of the present disclosure, when obtaining the candidate soundtrack from the music library based on the target attribute information and the image content feature, the soundtrack recommendation unit is configured to:
search, based on a predetermined priority order, a predetermined number of soundtracks matching the target attribute information, the image content feature and current hot information respectively from the music library, and determining the predetermined number of soundtracks as the candidate soundtrack.

According to one or more embodiments of the present disclosure, the predetermined priority order, from high to low, is: the target attribute information, the image content feature, and the current hot information.

According to one or more embodiments of the present disclosure, when synthesizing the target candidate soundtrack selected by the user and the video material, the editing unit is configured to:
input the target candidate soundtrack selected by the user into an audio track corresponding to the video material to synthesize the audio track and the video track.

According to a third aspect, an electronic device is provided according to one or more embodiments of the present disclosure, including: at least one processor and a memory;
the memory storing computer-executable instructions;
the at least one processor executing the computer-executable instructions stored in the memory, to cause the at least one processor to perform the method of the first aspect and various possible designs of the first aspect.

According to a fourth aspect, a computer-readable storage medium, storing computer-executable instructions is provided according to one or more embodiments of the present disclosure, and the computer-executable instructions, when executed by a processor, the video soundtrack method of the first aspect and various possible designs of the first aspect is implemented.

According to a fifth aspect, a computer program product is provided according to one or more embodiments of the present disclosure, including computer-executable instructions that, when executed by a processor, the video soundtrack method according to the first aspect and various possible designs of the first aspect is implemented.

The above description is merely an illustration of the preferred embodiments of the present disclosure and the principles of the application. It should be understood by those skilled in the art that the disclosure in the present disclosure is not limited to the technical solutions of the specific combination of the above technical features and should also cover other technical solutions formed by any combination of the above technical features or their equivalent features without departing from the above disclosed concept. For example, the above features are the technical solutions formed by mutually replacing technical features disclosed in the present disclosure (but not limited to).

Further, while operations are depicted in a particular order, this should not be understood to require that these operations be performed in the particular order shown or in sequential order. In certain circumstances, multitasking and parallel processing may be advantageous. Likewise, while several specific implementation details are included in the discussion above, these should not be construed as limiting the scope of the present disclosure. Certain features described in the context of separate embodiments may also be implemented in combination in a single embodiment. Conversely, the various features described in the context of a single embodiment may also be implemented in a plurality of embodiments either individually or in any suitable subcombination.

Although the present subject matter has been described in language specific to structural features and/or methodological acts, it is to be understood that the subject matter defined in the appended claims is not necessarily limited to the specific features or acts described above. Rather, the specific features and acts described above are merely exemplary forms of implementing the claims.

## Claims

1. A video soundtrack method, comprising:
obtaining target attribute information of a video material to be soundtracked in a video track of a video editing tool;
performing image recognition on the video material to determine an image content feature of the video material;
obtaining a candidate soundtrack from a music library based on the target attribute information and the image content feature; and
in response to a selection instruction of a user for the candidate soundtrack, synthesizing a target candidate soundtrack selected by the user and the video material.

2. The method of claim 1, wherein the video material comprises a plurality of sub-video segments; and obtaining the candidate soundtrack from the music library based on the target attribute information and the image content feature comprises:
obtaining a correlation parameter between adjacent sub-video segments;
obtaining the candidate soundtrack from the music library based on the correlation parameter, and the target attribute information and the image content feature of each sub-video segment.

3. The method of claim 2, wherein obtaining the candidate soundtrack from the music library based on the correlation parameter, and the target attribute information and the image content feature of each sub-video segment comprises:
determining adjacent sub-video segments with the correlation parameter greater than a predetermined threshold as a sub-video segment combination;
integrating the target attribute information and the image content feature of various sub-video segments in the sub-video segment combination; and
obtaining, from the music library based on the integrated target attribute information and image content feature, the candidate soundtrack as a candidate soundtrack shared by the various sub-video segments in the sub-video segment combination.

4. The method of claim 3, wherein obtaining the candidate soundtrack from the music library based on the integrated target attribute information and the image content feature comprises:
determining a weight of each sub-video segment in the sub-video segment combination based on predetermined attribute information of the sub-video segment;
determining a weight of each target attribute information and a weight of each image content feature in the integrated target attribute information and image content feature based on the weight of each sub-video segment in the sub-video segment combination; wherein the target attribute information and the image content feature of a sub-video segment with a higher weight have higher weights; and
obtaining the candidate soundtrack from the music library based on the integrated target attribute information and image content feature, and the corresponding weight.

5. The method of claim 2, wherein obtaining the candidate soundtrack from the music library based on the correlation parameter, and the target attribute information and the image content feature of each sub-video segment comprises:
in accordance with a determination that there is no adjacent sub-video segment with the correlation parameter greater than a predetermined threshold, obtaining the candidate soundtrack corresponding to each sub-video segment from the music library based on the target attribute information and the image content feature of each sub-video segment.

6. The method of claim 1, wherein the video material comprises a plurality of sub-video segments; and obtaining the candidate soundtrack from the music library based on the target attribute information and the image content feature comprises:
integrating the target attribute information and the image content features of all sub-video segments; and
obtaining, from the music library based on the integrated target attribute information and image content feature, the candidate soundtrack as a candidate soundtrack shared by all the sub-video segments.

7. The method of claim 6, wherein obtaining the candidate soundtrack from the music library based on the integrated target attribute information and image content feature comprises:
determining a weight of each sub-video segment based on predetermined attribute information of the sub-video segment;
determining a weight of each target attribute information and a weight of each image content feature in the integrated target attribute information and image content feature based on the weight of each sub-video segment; wherein the target attribute information and the image content feature of a sub-video segment with a higher weight have higher weights; and
obtaining the candidate soundtrack from the music library based on the integrated target attribute information and image content feature, and the corresponding weight.

8. The method of any one of claims 1 to 7, wherein obtaining the target attribute information of the video material to be soundtracked in the video track of the video editing tool comprises:
extracting key attribute information from attribute information of the video material to be soundtracked;
and
obtaining derivative attribute information based on the key attribute information, and determining the key target attribute information and/or the derivative attribute information as the target attribute information.

9. The method of any one of claims 1 to 7, wherein obtaining the candidate soundtrack from the music library based on the target attribute information and the image content feature comprises:
searching, based on a predetermined priority order, a predetermined number of soundtracks matching the target attribute information, the image content feature and current hot information respectively from the music library, and determining the predetermined number of soundtracks as the candidate soundtrack.

10. The method of claim 9, wherein the predetermined priority order, from high to low, is: the target attribute information, the image content feature, and the current hot information.

11. The method of any one of claims 1 to 7, wherein synthesizing the target candidate soundtrack selected by the user and the video material comprises:
inputting the target candidate soundtrack selected by the user into an audio track corresponding to the video material to synthesize the audio track and the video track.

12. A video soundtrack device, comprising:
an information extracting unit configured to obtain target attribute information of a video material to be soundtracked in a video track of a video editing tool;
a feature extracting unit configured to perform image recognition on the video material to determine an image content feature of the video material;
a soundtrack recommendation unit configured to obtain a candidate soundtrack from a music library based on the target attribute information and the image content feature; and
an editing unit configured to in response to a selection instruction of a user for the candidate soundtrack, synthesize the target candidate soundtrack selected by the user and the video material.

13. An electronic device, comprising:
at least one processor and a memory;
the memory storing computer-executable instructions;
the at least one processor executing the computer-executable instructions stored in the memory, to cause the at least one processor to perform the method of any of claims 1 to 11.

14. A computer-readable storage medium, storing computer-executable instructions, and the computer-executable instructions, when executed by a processor, the method of any of claims 1 to 11 is performed.

15. A computer program product, comprising computer-executable instructions that, when executed by a processor, the method of any of claims 1 to 11 is performed.
